(19) Europäisches Patentamt
European Patent Office
Office européen des brevets

(11) **EP 3 104 514 B1**

(12) **EUROPEAN PATENT SPECIFICATION**

(45) Date of publication and mention
of the grant of the patent:
**29.08.2018 Bulletin 2018/35**

(51) Int Cl.:
***H02M 7/48*** *(2007.01)*

(21) Application number: **15462001.7**

(22) Date of filing: **09.06.2015**

(54) **METHOD AND SYSTEM FOR SIMULATING INVERTER PHASE LEGS DURING DISCONTINUOUS CONDUCTION MODE**

VERFAHREN UND SYSTEM ZUR SIMULATION VON WECHSELRICHTERPOLWECHSLERN IM MODUS DER DISKONTINUIERLICHEN LEITUNG

PROCÉDÉ ET SYSTÈME PERMETTANT DE SIMULER DES BRANCHES DE PHASE D'ONDULEUR EN MODE DE CONDUCTION DISCONTINUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.12.2016 Bulletin 2016/50**

(73) Proprietor: **Siemens Zrt.**
**1143 Budapest (HU)**

(72) Inventors:
• **Kökényesi, Tamás**
**H-3200 Gyöngyös (HU)**
• **Varjasi, István**
**H-1221 Budapest (HU)**
• **Debreceni, Tibor**
**H-5700 Gyula (HU)**
• **Balázs, Gergely György**
**H-1143 Budapest (HU)**

• **Futo, András**
**H-8000 Székesfehérvár (HU)**

(74) Representative: **Mak, Andras**
**S.B.G. & K. Patent and Law Offices**
**Andrassy ut 113.**
**1062 Budapest (HU)**

(56) References cited:
• **GUSTAVO G. PARMA; VENKATA DINAVAHI: "Real-Time Digital Hardware Simulation of Power Electronics and Drives", IEEE TRANSACTIONS ON POWER DELIVERY, vol. 22, 2007, pages 1235-1246, XP11176091,**
• **WENTAO WANG; HUOXUAN SHEN; VENKATA DINAVAHI: "Physics-Based Device-Level Power Electronic Circuit Hardware Emulation on FPGA", IEEE TRANSACTIONS ON INDUSTRIAL INFORMATICS, vol. 10, 2014, pages 2166-2179, XP11563698,**

**Description**

TECHNICAL FIELD

The invention relates to the field of simulation, specifically to the simulation of inverters and even more specifically to a method and a system for simulating a phase leg of an inverter during discontinuous conduction mode.

DISCUSSION OF THE BACKGROUND

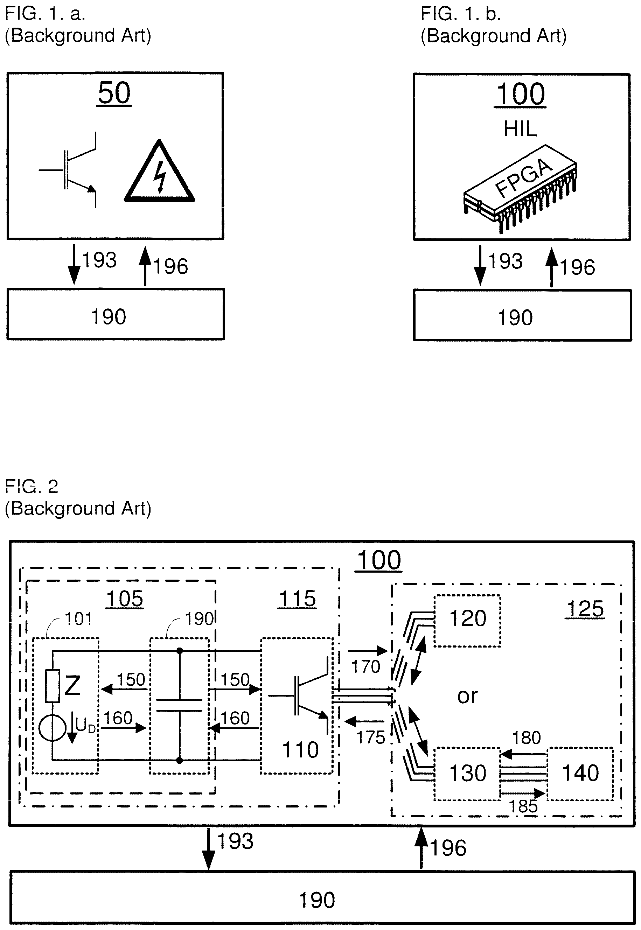

As shown in Fig. 2, a power control system typically comprises a power source 115, a control unit 190 connected to the power source and a load 125 connected to the output of the power source. The power source 115 may comprise an inverter 110 with controllable switching elements, usually semiconductor switching elements, which are controlled by PWM signals of the control unit.

As depicted in Figure 1, a general power converter consists of two main parts: a power source unit 50 which contains the power electronic circuit, and a digital controller unit 190, which is usually realized using a DSP (Digital Signal Processor) or an FPGA (Field Programmable Gate Array). The controller unit receives information from the power source unit via measurement signals 193, and it controls the power unit via control signals 196. Testing the power controller hardware and software is quite problematic: expensive instruments are needed, and live tests with a completely assembled converter can be dangerous because of the presence of high voltage. A low-power model of the main circuit can be built under laboratory conditions, but it will have parameters (e.g. time constants and relative losses) differing from the ones of the original system.

Because of this, offline computer simulation is often used for testing such converters. There are very precise and complex models for offline simulation (e.g. PSPICE based simulators), but they cannot be used for real-time simulation because of the required time step length. A very effective way to test controller units is HIL (Hardware-In-the-Loop) simulation as described in US Patent No. 7880460. A basic block diagram of the idea of HIL can be seen in Fig. 1. A HIL simulator 100, which replaces the hardware under test, can calculate the "measured" signals 193 from the control signals 196 and can operate at time steps in the order of microseconds, or even faster. HIL combines the advantages of other testing methods: low cost like offline computer simulation, complex tests like laboratory testing, and realistic conditions like testing in the field. HIL technology also allows the simulation of rare events like failures of certain components which otherwise would be hard to test on an ordinary test bench. The further benefit of this test method in contrast to the computer-based simulation method is that it can have the same I/O signal levels of the control unit board as the signal levels of the interface (control and measured signals) between the control unit and the power unit, thus the hardware- and the software test of the control system 190 can be fulfilled.

The main concept of using HIL simulation in power electronic systems is that computational models in the HIL 100 replace the power parts 50 of the system. This means that not only the inverter itself but all other power components on both sides of the converter, on the DC side and on the AC side (motor or filter and grid model) are simulated. The simulated parts are connected through real physical interfaces like analog and digital channels to the control boards under development, so the boards can be tested and validated in their seemingly real environment. A good HIL simulator is completely transparent for the controller unit, so that the controller is unable to distinguish between the simulator and a real system. Therefore HIL simulation can significantly shorten the development time and reduce costs.

HIL simulation in general means real-time calculation of the state equations of the power converter. In advanced HIL systems, it is advisable to follow a modular structure 100 in the software of the HIL, which is shown in Fig. 2. This consists of independently configurable and exchangeable modules. Each module represents one part of the power circuit, such as DC source model 101, capacitor model 190, inverter model 110 and motor model 120 or filter model 130 and grid model 140. The input and output variables of each modules are well defined. During HIL simulation these variables are communicated between the individual models, in the defined direction. The DC source model 101 is accomplished with its Thevenin-equivalent circuit. The capacitor 190 defines the output voltage 150 of the DC source, which calculates its DC current 160 for the capacitor. Similarly, the inverter model 110 uses the capacitor voltage 150 and determines its charging or discharging current 165 for the capacitor. For the calculation, it uses the control signals from the controller unit and the phase currents 175 on the AC side of the inverter, which can be for example a motor model 120. In other cases it may be a filter model 130, which connects the inverter to an electric grid model 140. Both options also require the AC phase voltages 170 as input variables from the inverter model 110. Similar variable-exchange method can be used between the grid 140 and filter 130 models, the exact types of the variables 180 and 185 depend on the modeled circuit. The arrows in the figures are not indicative for the direction of the physical parameters, they only indicate the direction of communication between the individual models.

Nowadays, mostly FPGA circuits are used for the HIL simulators as described in the literature:

Mahmoud Matar and Reza Iravani, "FPGA Implementation of the Power Electronic Converter Model for Real-Time Simulation of Electromagnetic Transients" IEEE Transactions on Power Delivery (2010), vol. 25, pp. 852-860.
Gustavo G. Parma and Venkata Dinavahi, "Real-Time Digital Hardware Simulation of Power Electronics and Drives" IEEE Transactions on Power Delivery (2007), vol. 22, pp. 1235-1246.
Tarek Ould Bachir and Jean-Pierre David, "FPGA-Based Real-Time Simulation of State-Space Models Using Floating-Point Cores" In: Proceedings of the 14th International Power Electronics and Motion Control Conference (EPE-PEMC 2010) pp. S2 26-31. Place and date of conference: Ohrid, Macedonia, 2010.09.06-2014.09.08.

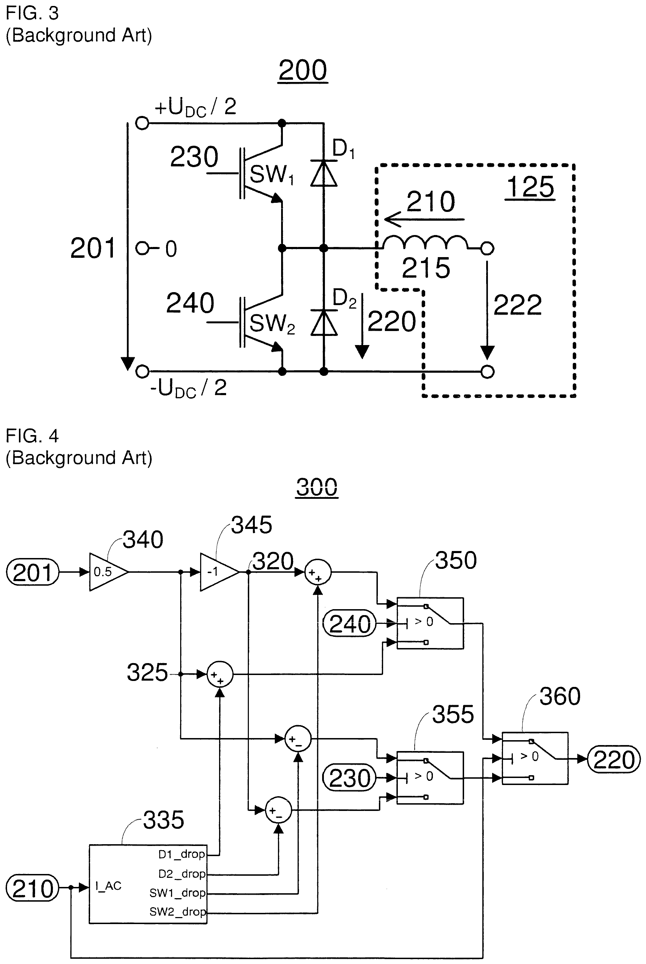

FPGAs provide high speed interfaces, low latency and smaller time steps than computers thanks to their highly parallelized structure as described in Julio C. G. Pimentel and Hoang Le-Huy: "Hardware Emulation for Real-Time Power System Simulation" In: Proceedings of International Symposium on Industrial Electronics: IEEE ISIE pp. 1560-1565. Place and date of conference: Montreal, Quebec, Canada, 2006.07.09-2006.07.12. There are several published papers which describe models to the phase leg seen on Fig. 3. Some researchers concentrate on the voltage-current characteristics or the switching behavior of the switching elements:

Li Yong, Chang Tianqing, Bai Fan and Chen Yulin, "Switching Characteristics Simulation of IGBT Based on FPGA" In: Proceedings of International Conference on Computational Problem-Solving (ICCP 2010), pp. 386-391. Place and date of conference: Lijiang, China, 2010.12.03-2010.12.05.
Aung Myaing and Venkata Dinavahi, "FPGA-Based Real-Time Emulation of Power Electronic Systems With Detailed Representation of Device Characteristics" IEEE Transactions on Industrial Electronics (2011), vol. 58, pp.358-368.

Others try to provide a detailed, realistic physical model of the semiconductor components: Wentao Wang, Zhuoxuan Shen and Venkata Dinavahi, "Physics-Based Device-Level Power Electronic Circuit Hardware Emulation on FPGA" IEEE Transactions on Industrial Informatics (2014), vol. 10, pp. 2166-2179.
Handy Fortin Blanchette, Tarek Ould-Bachir and Jean Pierre David "A State-Space, Modeling Approach for the FPGA-Based Real-Time Simulation of High Switching Frequency Power Converters" IEEE Transactions on Industrial Electronics (2012), vol. 59, pp. 4555-4567.
Inverters generally connect to loads, which often have an inductive component which can be a motor or a choking coil in a grid filter. A typical phase leg 200 can be seen in Fig. 3 with a pair of semiconductor switching elements SW1, SW2 connected in series between the DC voltage rails of the power source and a pair of diodes D1, D2 connected in series between the DC voltage rails of the power source wherein each of the diodes is connected antiparallel with a respective semiconductor switching element. The semiconductor switching element may be selected for example but not exclusively from the group consisting of BJTs (bipolar junction transistor), MOSFETs (Metal Oxide Semiconductor Field Effect Transistor), IGBTs (Insulated Gate Bipolar Transistor) and other controllable semiconductor switches. In the following examples we will use the term semiconductor switch "SW" or IGBT for representing the semiconductor switching elements in general. The load connecting to the inverter is represented by a load model 215 with a phase voltage or phase leg voltage 220 on the inverter side of the load and an output voltage 222 on the other side opposite the inverter. The difference between voltages 220 and 222 determines an AC current (I_AC) 210 in direction and magnitude. The inverter phase leg 200 comprising the two semiconductor switches and the two diodes connected to the DC voltage rails, receives a DC input voltage 201 from the voltage source (see Fig. 2). The control signals 230 and 240 of the semiconductor switches SW1 and SW2 are received from the control unit 190 which is - for sake of simplicity - not shown in FIG. 3. The output voltage 220 of the phase leg 200 depends on the control signals (when one of the semiconductor switches SW1, SW2 is conducting) or on the direction of the current 210 (when one of the diodes is conducting). The output voltage 222 is measured at The output of the inductive load 215 of a filter or motor.
In real-time HIL simulators, semiconductors are often treated as ideal switches. Advanced models simulate the semiconductor switch and diode operation separately, both with an own voltage drop and with a delay for the switch. Such a phase leg model 300 can be seen in Fig. 4. This whole model is solved once in every so called simulation time step. This is the amount of time needed to perform all the calculations. The inputs of the model are the DC voltage 201, the phase current 210, the control signal of the low-side semiconductor switch 240 and of the high-side semiconductor switch 230. The output is the phase voltage 220. First, the DC voltage 201 is transformed to be symmetrical with respect to GND. This is done by the amplifier block consisting of an amplifier 340 with a multiplication factor of 0.5 and an amplifier 345 with a multiplication factor of -1. The value of voltage 320 is -Udc/2, while voltage 325 is +Udc/2. In the system incorporated is also a block 335 for calculating the forward voltage drops of all four semiconductors SW1, SW2, D1, D, regardless of which one is conducting. The actual voltage drop values depending on the phase current 210 can be read from a lookup table or can be approximated using breakpoint characteristics of the semiconductor elements. Using the positive and negative DC rail voltages and the voltage drops, the possible steady-state output voltage values can be calculated. The switches 350, 355 for modeling the semiconductor switches SW1, SW2 and the switch 360 for modeling the diodes D1-D2 decide which of the four possible values is connected to the output voltage 220 of the phase leg based on the semiconductor switch control signal states and the current direction.

Table 1 (during functioning inverter)

| SW1 | SW2 | output 220 for positive currents (output of 350) | output 220 for negative currents (output of 355) |
|---|---|---|---|
| short | open | UDC_pos + D1_drop | UDC_pos - SW1_drop |
| open | short | UDC_neg + SW2_drop | UDC_neg - D2_drop |
| open | open | UDC_pos + D1_drop | UDC_neg - D2_drop |
| short | short | FAULT (not simulated) | FAULT (not simulated) |

As it may be clear from the above, the simulation system determines the output voltage or phase voltage 220 cyclically in consecutive time steps (tstep) with an interval time of less than 100 nanoseconds. It means that the phase voltage is determined during a grid cycle of 20 msec with a frequency of 50 Hz about quarter million times. The calculations shown in Table 1 are carried out for all three phases with a phase related system in parallel. Such a simulation is very time effective, however simple and easy to accomplish with hardware or software model elements.

In such models, if both switches are OFF in a phase leg (as during dead-time), the simple switch-based diode model chooses the output voltage based on current direction in the actual time step. However, if the semiconductor switch control signals are inactive for sufficient time, and the current drops to zero, the output voltage would alternate between the positive and negative DC rail voltages. In a variable step solver such a model causes the time step to decrease to its minimum setting. This causes a serious slowdown of the simulation under such operational conditions because the variable step solver detects the sudden change in the output of the model, and it will decrease the time step to its minimal limit. Although Matlab Simulink has tools to handle this problem in off-line simulation using e.g. the state port of integrators cooperating with Hit Crossing blocks, these tools are not supported by HDL code generation. Therefore it is impractical to use these simple models with variable-step solvers.

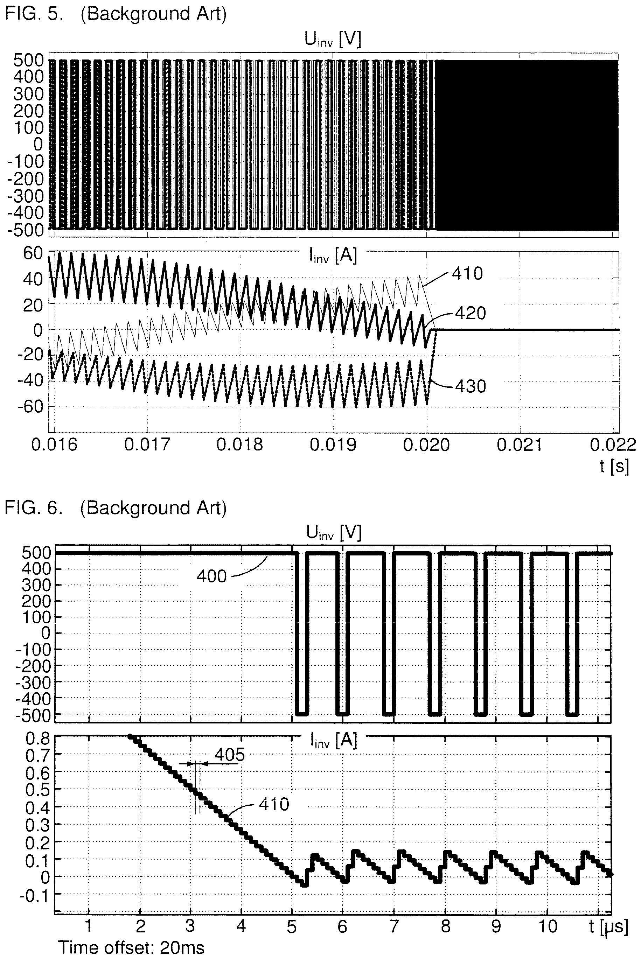

Fixed-step solvers do not suffer from such problems, but a simple switch-based model running in a discontinuous conduction mode (DCM) on a fixed-step solver generates a false high-frequency output voltage waveform which will have a period proportional to the time step. The minimum pulse width is equal to the length of one simulation time step. The cause of this is that the simple switch based model simulates the diode bridge with the switch 360 which presumes that one of the diodes is always conducting. This model is unable to simulate zero current conditions. This phenomenon can be seen for a three phase system in Fig. 5 for a switch-off. Before the switch-off, the current ripple caused by the switched operation is clearly visible. This waveform is the indirect result of the square wave phase leg voltage 220. The total voltage across the inductor 215 is the difference between the AC bus voltage 222 and the phase leg voltage 220. The AC bus voltage usually does not change fast, and can be assumed constant for one period of the phase leg voltage. Because of this, the AC component of the inductor voltage is mainly determined by the phase leg voltage. The inductor integrates the voltage across it, and its current is determined by the following equation:

$$i_{210} = i_L = \frac{1}{L} \cdot \int u_L \, dt = \frac{1}{L} \cdot \int (u_{222} - u_{220}) \, dt$$

wherein $i_{210}$ is the AC bus current of the inverter which is equal to the current of inductor 215 marked with $i_L$. $u_L$ is the voltage across inductor 215, $u_{222}$ is the AC bus voltage 222 and $u_{220}$ is the phase leg voltage 220.

This integration of the inductor voltage causes the triangular ripple waveform in the inductor currents during normal operation. Based on the circuit diagram of Fig. 3 it can be understood that if both switches SW1 and SW2 are turned off, the rectifier circuit formed by D1 and D2 will always put such a voltage to the phase leg output that the inductor current 210 will keep to zero. If the current reaches zero, both D1 and D2 will stop conducting. This mode of operation is called Discontinuous Conduction Mode (DCM) and it always occurs when the inverter is not controlled (e.g. turned off) but it is also likely during light load conditions if the control dead time of the inverter is high.

During DCM, the current 210 remains zero until either SW1 or SW2 is switched on, or the no-load voltage 222 of the AC bus exceeds the DC bus voltage 201. Based on the above equation it is clear that after the switch-off transient if the current 210 remains zero, $u_L = 0$ and $u_{220} = u_{222}$. This condition needs to be simulated properly in HIL simulators in order to be able to properly test certain measurement and protection hardware and software on it.

In Fig. 5, after the switch-off at a time 0,020 sec., the three phase currents 410 420 and 430 converge to zero. The "R" phase voltage 400 and current 410 for the same switch-off can be seen at a magnified scale in Fig. 6 starting at a 0,020 sec offset being marked as 0. The simulation time step 405 is also visible in this magnified image. The false pulses of the output voltage 400 are clearly visible. This discontinuous operation will also cause small ripples in the output current 410, because the load of the inverter (which is a motor or a filter for grid connection) is inductive. The average of the AC side output current 410 is still zero and the average of the output voltage 400 is equivalent to the voltage belonging to the zero phase leg current. Still, the false square wave output voltage and the current ripple diverges from the real physical values and is not appropriate to be used for testing certain protection hardware and software.

There are problems with common mode currents and energy balance, too. This results from the simulation error described before, which causes a small AC current to flow through the phase leg during discontinuous conduction or switched off state. This AC current is rectified by the diodes of the phase leg. If a DC capacitor model is attached to the inverter model, the rectified current ripple constantly charges the DC side capacitor. The resulting error can be quite significant if the control of the semiconductor switches is disabled for several milliseconds.

Adding a junction capacitor model to the semiconductor models can provide an acceptable output voltage and can thus solve the problem described before. The simulation time step in FPGA-based HIL simulators is usually too long for this, because the period of the high frequency oscillation of the junction capacitor-filter inductor circuit is only a couple of times longer than the simulation time step and stability problems come into view. Although it is a good solution for off-line models, it cannot be used in a real-time HIL simulation.

The main object of this invention is to create a new solution for the simulation of a phase leg in voltage sourced PWM inverters in the discontinuous conduction mode. Such a system and method well approximates the average output voltage of the real circuit arrangement if the phase leg is not controlled and the AC side current goes discontinuous, but it is still not too complex and it is usable in real-time HIL simulators.

SUMMARY

The above object may be achieved by using a method for simulating the behaviour of an inverter phase leg of a power control system in a discontinuous conduction mode (DCM), wherein the inverter phase leg comprises a pair of semiconductor switching elements connected in series between DC voltage rails of a DC power source and a pair of diodes connected in series between the DC voltage rails of the DC power source wherein each of the diodes is connected antiparallel with a respective semiconductor switching element. In this arrangement a load is connected to the output of the phase leg. According to one aspect of the invention, the method comprises the following steps:

- each component of the inverter phase leg is represented by an individual model,
- the models representing the semiconductor switching elements are provided with an input DC voltage value and a control signal,
- the model representing the diodes is provided with the outputs values of the models representing the semiconductor switching elements and an AC current value. The method is further characterized in that switch-based models are used for the models representing the semiconductor switching elements and a PI controller based model is used for representing the diodes.

The models representing the semiconductor switching elements may be further provided with voltage drop values characteristic for the semiconductor switching elements and the diodes.

The switch-based models may be switched over in response to the control signal and more specifically the switch-based models are switched over into a first state when the control signal has a positive value and into a second state when the control signal has a negative value.

According to an aspect of the method, the input values of the PI controller based model are limited to a predetermined range.

When one of the semiconductor switches is in a conducting state, the input values of the PI controller based model are limited to a predetermined range around the DC rail voltage.

When none of the semiconductor switches is in a conducting state, the input values of the PI controller based model are limited to a predetermined range defined by the DC rail voltage and a voltage drop of a diode.

According to another aspect of the method, the inverter output AC current is lead to the proportional part of the PI controller and the inverter output voltage value is lead to the integrating part of the PI controller.

The object of the invention may be achieved by using a system comprising a model for simulating the behaviour of an inverter phase leg of a power control system in a discontinuous conduction mode (DCM), wherein the inverter phase leg comprises a pair of semiconductor switching elements connected in series between DC voltage rails of a DC power source and a pair of diodes connected in series between the voltage rails of the DC power source wherein each of the diodes is connected antiparallel with a respective semiconductor switching element with a load connected to the output of the phase leg. According to one aspect of the invention, in the system

- each component of the inverter phase leg is represented by an individual model
- the models representing the semiconductor switching elements are connected to an input DC voltage, and a control signal,

- the model representing the diodes is connected to the outputs of the switch models representing the semiconductor switching elements and an inverter output AC current. The system is further characterized in that the models representing the semiconductor switching elements are switch-based models and the model representing the diodes is a PI controller based model.

In the system the models representing the semiconductor switching elements may be further connected to a model for generating voltage drop values characteristic for the semiconductor switching elements and the diodes.

In the system the switch-based models may have two input ports for receiving input voltage values, an input port for receiving a state control signal, and an output port for providing an output voltage value.

In the system the PI controller based model may comprise a limiter for limiting the input values to a predetermined range.

In the PI controller based model an AC current wire may be connected to the proportional part of the PI controller and an output voltage wire may be connected to the integrating part of the PI controller.

The load connected to the output of the inverter may comprise an inductive component.

BRIEF DESCRIPTION OF THE DRAWINGS

In order that the invention may be more readily understood, reference will now be made, by way of example, to the accompanying drawings in which:

Figure 1 is a block diagram of a power control system comprising a power part and a control unit and a replacement system for the simulation purposes.

Figure 2 is a block diagram of a power control system comprising a general three phase inverter.

Figure 3 is a circuit diagram of one phase leg in a general three phase two level voltage sourced inverter.

Figure 4 is a block diagram of a simple switch-based phase leg model of the prior art which is capable of simulating diode operation and voltage drop.

Figure 5 is a graph of the voltage and current waveforms versus time in all three phase legs of a simulated inverter which is switched off at t=20ms and uses a simple switch-based diode model not capable of simulating discontinuous conduction.

Figure 6 is a detail of Figure 5 starting at the switch-off time t=20ms with an enlarged time scale comprising the graph of the voltage and current waveforms versus time in one of the phase legs.

Figure 7 is a block diagram of a phase leg model according to an example of the invention capable of simulating discontinuous conduction.

Figure 8 is a block diagram of an example of a discrete PI controller used in the model of Fig. 7.

Figure 9 is a circuit diagram of the inverter phase leg simulated by the discrete PI controller.

Figure 10 is a graph of the voltage and current waveforms versus time in all three phase legs of a simulated inverter which is switched off at t=20ms and uses the new PI controller based diode model capable of simulating discontinuous conduction.

Figure 11 is a detail of Figure 10 starting at the switch-off time t=20ms with an enlarged time scale comprising a graph of the voltage and current waveforms versus time in one of the phase legs. The simulator uses the new PI controller based diode model.

DETAILED DESCRIPTION

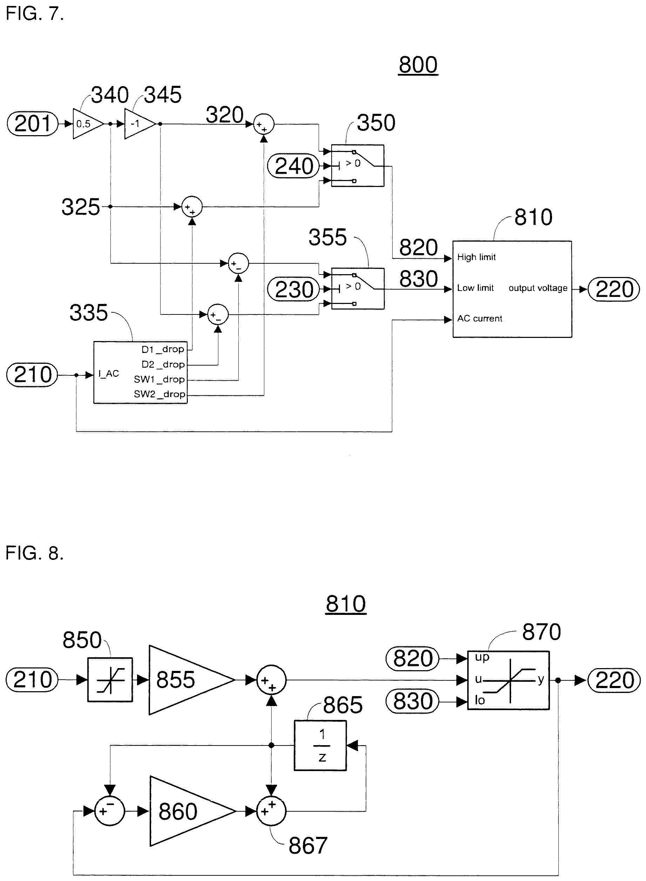

As already stated, the invention suggests the use of a method and system, wherein all of the components of the inverter phase leg are represented by a model. The semiconductor switching elements SW1 and SW2 are represented by switch based models 350 and 355. The switch based models have two input ports for receiving Input voltage values, an Input port for receiving a state control signal 240, 230, and an output port for providing an output voltage value 820, 830. The diodes D1 and D2 are represented by a PI controller based model wherein the PI controller based model 810 comprises a limiter for limiting the output value 220 by the input values 820, 830 to a predetermined range (see Figs. 7 and 8). The PI controller further comprises two Input ports for receiving input voltage values, an Input port for receiving an AC current signal 210, and an output port for providing an output voltage value 220. The system also comprises a model 335 for generating voltage drop values characteristic for the semiconductor switching elements and the diodes.

According to the method of the invention it is possible to regulate the output voltage 220 on the inverter side of the load 215 to be equal to the internal voltage 222 of the loading circuit 215, which decreases the output current to zero in a short time after the semiconductor switches of the inverter are switched off. This zero current control is performed by a discrete-time PI controller. The output of the PI controller is saturated to the DC bus voltage range. The voltage drops of the diodes are also taken into account. If a switch is turned on, the saturation limits are modified, so that the output voltage remains in the correct range allowed by the corresponding switch and the diodes.

The proposed phase leg model 800 can be seen in Fig. 7.

The model comprises a PI controller and related logic which determines the upper and lower saturation limits of the PI controller. It uses the same input and output signals 201, 210, 230, 240 and 220 as the simple model 300 of Fig. 4. It has the same gain blocks 340 and 345 for calculating the positive and negative DC rail voltages 325 and 320. The voltage drop calculator block 335 Is also the same. Depending on the semiconductor switch control signals, the switches 350 and 355 calculate the high limit 820 and the low limit 830 for the PI controller 810. The limits were determined based on Table 2, which represents realistic operation.

Table 2.

| Control | SW1 state (230) | SW2 state (240) | High limit (output of 350) | Low limit (output of 355) |
|---------|-----------------|-----------------|----------------------------|---------------------------|
| High | H | L | UDC_pos + D1_drop | UDC_pos - SW1_drop |
| Low | L | H | UDC_neg + SW2_drop | UDC_neg - D2_drop |
| Off | L | L | UDC_pos + D1_drop | UDC_neg - D2_drop |

If the high side switch is operated, the phase leg output voltage can only swing around the positive DC rail, in a small range allowed by D1 and SW1 voltage drops. If the low side switch is operated, the phase leg output voltage is allowed to change around the negative DC rail in a small range allowed by D2 and SW2 voltage drops. If both semiconductor switches are off, the phase leg voltage can have any value within the full DC voltage range plus / minus the voltage drops of the rectifier diodes. In this case, the actual value needs to be determined based on the phase leg current 210. As described before, the phase leg current will keep to zero if both switches remain OFF. If the current signal 210 reaches zero, discontinuous conduction mode (DCM) starts and the phase leg voltage 220 will need to be equal to the AC side voltage 222 which is not known by the inverter model. The main goal of the PI controller is to properly determine the phase leg voltage 220 in this situation.

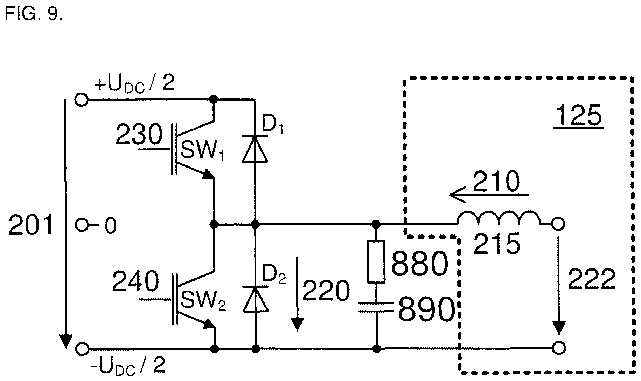

The inner structure of an exemplary PI controller 810 can be seen in Fig. 8. The inputs are the phase current 210, the high voltage limit 820 and the low voltage limit 830, while the output is the phase leg voltage 220. The dynamic saturation is realized by block 870. The implementation of the saturation uses the so called automatic reset configuration of the PI controller. In this configuration, the integral action is implemented applying positive feedback with a first-order low-pass filter consisting of gain block 860 and delay block 865. The main goal of this implementation was to avoid oscillations arising from rapid current changes in continuous conduction mode. This was done by imitating the behaviour of a series RC element similar to the circuit shown in Fig. 9. This RC element analogy of the PI controller is provided only for easier understanding.

Following this analogy, a saturation block 870 is placed directly to the output of the PI controller. This block receives the limits described in table 2 and is used for simulation of normal phase leg operation in continuous conduction mode. The saturation block provides the phase leg output voltage 220. The output value of the integrator's delay block 865 is analogous to the voltage of the capacitor 890. In this analogy, the value of the amplifier block 855 is R, so the output of block 855 is the voltage across the resistor 880 and the output of 865 is the voltage across capacitor 890. The sum of these two gives the phase leg voltage 220. The saturation block is analogous to the diodes D1 and D2.

The input value of the amplifier 860 resembles the voltage across the resistor 880. The current of this resistor is equal to its voltage divided by the resistor's value R. This current is equal to the capacitor current and from the capacitor current, the capacitor voltage can be calculated via using a discrete integrator (also called summator). This integrator is built up from a delay block 865 and an adder 867. The whole equation of the capacitor can be seen below for better understanding:

$$u_{C_{890}} = \frac{1}{C_{890}} \cdot \int i_{C_{890}} \, dt = \frac{1}{C_{890}} \cdot \int \frac{u_{R_{880}}}{R_{880}} \, dt = \frac{1}{R_{880} \cdot C_{890}} \cdot \int \left( u_{220} - u_{C_{890}} \right) \, dt$$

As seen from this formula, following the analogy of Fig. 9, the Amplification $A_{860}$ of the amplifier 860 is the reciprocal of the time constant. Of course, the equation is solved in discrete time, so discrete integration (summation) is used and the simulation time step 'tstep' also needs to be considered:

$$A_{860} = \frac{t_{step}}{R_{880} \cdot C_{890}} = \frac{t_{step}}{\tau}$$

where $R_{880}$ is resistance value of resistor 880, $C_{890}$ is the capacitance value of the capacitor 890 and $\tau$ is the time constant $R_{880}*C_{890}$.

When not saturated, this PI controller operates the same way as any discrete-time PI controller, and the tuning can also be performed using the same methods. To be able to tune the PI controller parameters 855 and 860, some information is required about the rest of the power circuit. The simplest way of tuning is to assume that the load block 125 is a single RL type (resistive - inductive) load, so that from a control system point of view, the plant only consists of a single integrator, which is the inductance 215.

The approximate inductance value during discontinuous conduction ($L_{disc}$), the DC voltage ($U_{DC}$) and the simulation response time ($t_{SIM\_RESP}$) (i.e. control system dead time) are required to be able to calculate the controller parameters 855 and 860. From these, the $L_{disc}$ value shall be set to the total inductance seen by the AC side of the inverter. Iron core saturation effects do not need to be taken into consideration, as this PI controller normally operates only if the current is close to zero. A too high $L_{disc}$ value might cause divergent operation, while too small values might lead to oscillations, so that proper knowledge of the inductance value is required. The simulation response time needs to be equal to $t_{step}/2$ (where $t_{step}$ is the simulation time step), because of the average delay caused by the integrator in the PI controller, plus any other delay present in the simulated system. The equations used to calculate the controller parameters are the following:

$$\varphi_0 = \frac{\pi}{2} - \varphi_{margin}$$

$$\omega_c = \frac{2}{3} \cdot \frac{\varphi_0}{t_{SIM\_RESP}}$$

$$T_i = \frac{1}{\omega_c \cdot \tan\left(\frac{1}{3}\varphi_0\right)}$$

$$A_p = \omega_c \cdot L_{disc}$$

$$I_{lim} = \frac{U_{DC}}{A_p}$$

In the formula $\varphi_{margin}$ is the phase margin specified by the designer of the controller, and so is an input parameter for the tuning. 60° can be considered a good value for $\varphi_{margin}$. The $\omega_c$ cutoff frequency is an intermediate variable and is used only to calculate the $T_i$ integration time and $A_p$ amplification parameters, which are parameters of the discrete PI controller such that:

Amplification 855 is: $A_{855}$ = Ap
Amplification 860 is: $A_{860}$ = $t_{step}$/$T_i$ where $t_{step}$ is the simulation time step 405.

This simple calculation leaves the pre-defined phase margin $\varphi_{margin}$, and uses up the remaining phase shift $\varphi_0$ by leaving 2/3 of it for the dead time component, and 1/3 of it for the integrator.

It can be seen that the PI controller circuit 810 contains a saturation block 850 directly at the input of the controller. The $I_{lim}$ saturation value defined above is used by this block 810 to limit the input current 210 of the PI controller to a maximum and minimum value of $I_{lim}$ which causes no more than $U_{DC}$ voltage difference in the next time step. This saturation can be allowed, as any input current higher than $I_{lim}$ would have the same effect anyway because of the output saturation block 870. The input saturation was included to reduce the number of bits required for a fixed-point realization of the PI controller. Fixed-point numerical representation has many advantages in FPGAs and is widely used in FPGA-based HIL simulators.

The discrete-time method described above was implemented in Matlab/Simulink, as part of an inverter model. The discrete-time inverter model contains HDL (Hardware Description Language, e.g. Verilog or VHDL) synthesizable blocks only with fixed-point arithmetic, so it can be translated into HDL code as part of a complete HIL system and can be run on an FPGA.

The inverter model was tested in a grid connected configuration. The simulation was run using a 230 V 50 Hz grid and 220 V inverter output voltage. A DC bus voltage of 1000 V was used. The frequency of the triangular PWM carrier was 8 kHz. For the grid interface filter, L=900 μH and R=10 mΩ. The inverter model was simulated using a fixed time step of 100 ns, which can easily be realized in an advanced FPGA. Each semiconductor switch was simulated as having a 2 time steps on-delay, and a 7 time steps off-delay. A control dead time of 1 μs was inserted in the external controller.

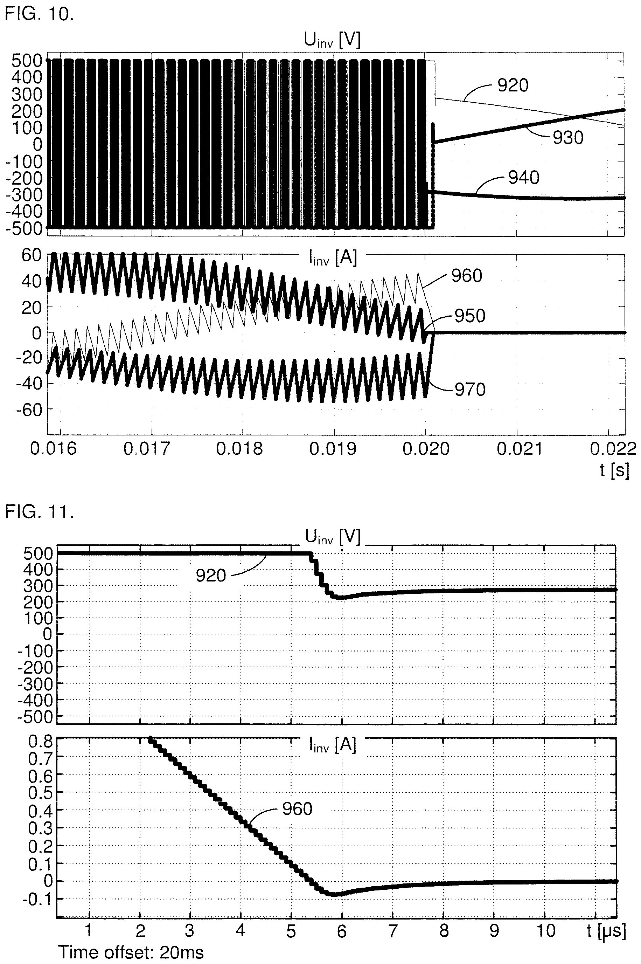

Fig. 10 shows a simulation result of the new inverter model after switching off all semiconductor switches. Fig 10 is directly comparable to Fig. 5 and has the same scaling. Waveforms 920, 930 and 940 are the inverter's output voltages, while waveforms 950, 960 and 970 are the inverter's input currents in phases R, S and T. It can be seen that the model does not affect normal operation when the gate signals are enabled, but quickly pulls the current down to zero after switching off the gate drive signals. After switch-off, the output voltages follow the grid voltages and no current flows through the inductive load 215. The resulting DC side current is also zero, which solves the DC link charge-up phenomenon described in the discussion of the background art. In Fig. 11, the same waveforms can be seen at a larger scale for one phase only starting at a 0,020 sec offset being marked as 0. In this figure, the switch-off event can be seen better. Fig 11 is directly comparable to Fig 6 and has the same scaling.

The disclosed exemplary embodiments provide system and method for real-time simulation of inverter bridge in discontinuous conduction mode and switched-off operation. It returns the correct fundamental frequency component of the output voltage, while still remains simple and fast. It can be used effectively with a forward Euler solver and can be synthesized and used effectively in real-time FPGA based HIL simulators. Testing in off-line simulation has shown that the model is fast enough to simulate dead-time events like discontinuous conduction during dead time. Because of this, a HIL simulator using this model could also be used for the testing of dead-time compensators.

It is understood that the system and method described herein may be included in a programmable HW array such as an FPGA and transformed to hardware in the production of integrated circuits. Additionally, the apparatus and methods described herein may be embodied as a combination of hardware and software. Thus, the present invention should not be limited by any of the above-described exemplary embodiments, but should be defined only in accordance with the following claims and their equivalents.

**Claims**

1. Method for simulating the behaviour of an inverter phase leg of a power control system in discontinuous conduction mode (DCM), the inverter phase leg comprising a pair of semiconductor switching elements (SW1, SW2) connected in series between DC voltage rails of a DC power source and a pair of diodes (D1, D2) connected in series between the DC voltage rails of the DC power source wherein each of the diodes (D1, D2) is connected antiparallel with a respective semiconductor switching element (SW1, SW2), wherein a load is connected to the output of the phase leg, and wherein

   - each component of the inverter phase leg Is represented by an Individual model (350, 355; 360)
   - the models (350, 355) representing the semiconductor switching elements (SW1, SW2) are provided with an Input DC voltage value (201) and a control signal (240, 230),
   - the model (360) representing the diodes (D1, D2) is provided with the outputs values (820, 830) of the models (350, 355) and an AC current value (210), **characterized in that** switch-based models (350, 355) are used for the models representing the semiconductor switching elements (SW1, SW2) and a PI controller based model (810) is used for representing the diodes (D1, D2),

   wherein the output value (820) of the model (350) representing a high limiting value is lead to the high limiting input of the PI controller (810) and the output value (830) of the model (355) representing a low limiting value is lead to the low limiting Input of the PI controller (810).

2. The method of claim 1, wherein the models (350, 355) representing the semiconductor switching elements are further provided with voltage drop values characteristic for the semiconductor switching elements and the diodes.

3. The method of claim 1, wherein the switch-based models (350, 355) are switched over in response to the control signal (230, 240).

4. The method of claim 3, wherein the switch-based models (350, 355) are switched over into a first state when the control signal has a positive value and Into a second state when the control signal has a negative value.

5. The method of claim 1, wherein the input values (820, 830) of the PI controller based model (810) are limited to a predetermined range.

6. The method of claim 5, wherein the limited high input value (820) of the PI controller based model (810) is limited to a predetermined range around the high DC rail voltage and the limited low input value (830) of the PI controller based model (810) is limited to a predetermined range around the low DC rail voltage if one of the respective semiconductor switches are in a conducting state.

7. The method of claim 5, wherein the input values (820, 830) of the PI controller based model (810) are limited to a predetermined range defined by the DC rail voltage and a voltage drop of a diode (D1, D2) If none of the semiconductor switches is in a conducting state.

8. The method of claim 5, wherein the AC current (210) is lead to the proportional part of the PI controller and the output voltage value (220) is lead to the integrating part of the PI controller.

9. System for simulating the behaviour of an inverter phase leg of a power control system in discontinuous conduction mode (DCM), the power control system comprising a power source with voltage rails, a control unit connected to the input of the power source and a load connected to the output of the power source, the power source comprising an Inverter phase leg comprises a pair of semiconductor switching elements (SW1, SW2) connected in series between DC voltage rails of a DC power source and a pair of diodes (D1, D2) connected in series between the voltage rails of the DC power source wherein each of the diodes is connected antiparallel with a respective semiconductor switching element with a load connected to the output of the phase leg, wherein

- each component of the inverter phase leg is represented by an individual model (350, 355; 360)
- the models (350, 355) representing the semiconductor switching elements are connected to an input DC voltage (201), and a control signal (240, 230),
- the model (360) representing the diodes is connected to the outputs (820, 830) of the models (350, 355) and an AC current (210)

**characterized in that** the models representing the semiconductor switching elements are switch-based models (350, 355) and the model representing the diodes is a PI controller based model, wherein the output value (820) of the model (350) representing a high limiting value is connected to the high limiting input of the PI controller (810) and the output value (830) of the model (355) representing a low limiting value is connected to the low limiting input of the PI controller (810).

10. The system of claim 9, wherein the models (350, 355) representing the semiconductor switching elements are further connected to a model (335) for generating voltage drop values characteristic for the semiconductor switching elements and the diodes.

11. The system of claim 9, wherein the switch-based models (350, 355) have two input ports for receiving input voltage values, an input port for receiving a state control signal, and an output port for providing an output voltage value (820, 830).

12. The system of claim 9, wherein the PI controller based model (810) comprises a limiter for limiting output voltage (220) by the input values (820, 830) to a predetermined range.

13. The system of claim 9, wherein an AC current (210) wire is connected to the proportional part of the PI controller and the output voltage (220) wire is connected to the integrating part of the PI controller.

14. The system of claim 9, wherein the load connected to the output of the inverter comprises an Inductive component.

**EP 3 104 514 B1**

**Patentansprüche**

1. Verfahren zum Stimulieren des Verhaltens eines Wechselrichterphasenzweigs eines Leistungsregelungssystems in einem Lückbetrieb (DCM), wobei der Wechselrichterphasenzweig ein Paar Halbleiterschaltelemente (SW1, SW2), die in Reihe zwischen Gleichspannungsschienen einer Gleichspannungsquelle geschaltet sind, und ein Paar in Reihe zwischen die Gleichspannungsschienen der Gleichspannungsquelle geschaltete Dioden (D1, D2) aufweist, wobei jede von den Dioden (D1, D2) antiparallel mit einem jeweiligen Halbleiterschaltelement (SW1, SW2) verbunden ist, wobei ein Verbraucher mit dem Ausgang des Phasenzweigs verbunden ist, und wobei

   - jede Komponente des Wechselrichterphasenzweigs von einem individuellen Modell (350, 355; 360) dargestellt wird,
   - die Modelle (350, 355), welche die Halbleiterschaltelemente (SW1, SW2) darstellen, mit einem Eingangs-Gleichspannungswert (201) und einem Regelsignal (240, 230) versehen werden,
   - das Modell (360), das die Dioden (D1, D2) darstellt, mit den Ausgangswerten (820, 830) der Modelle (350, 355) und einem Wechselstromwert (210) versehen wird, **dadurch gekennzeichnet, dass** auf Schaltern basierende Modelle (350, 355) für die Modelle verwendet werden, welche die Halbleiterschaltelemente (SW1, SW2) darstellen, und ein auf einem PI-Regler basierendes Modell (810) für die Darstellung der Dioden (D1, D2) verwendet wird,

   wobei der Ausgangswert (820) des Modells (350), der einen oberen begrenzenden Wert darstellt, zum oberen Begrenzungseingang des PI-Reglers (810) geleitet wird, und der Ausgangswert (830) des Modells (355), der einen unteren begrenzenden Wert darstellt, zum unteren Begrenzungseingang des PI-Reglers (810) geleitet wird.

2. Verfahren nach Anspruch 1, wobei die Modelle (350, 355), welche die Halbleiterschaltelemente darstellen, ferner mit Spannungsabfallwerten versehen werden, die kennzeichnend sind für die Halbleiterschaltelemente und die Dioden.

3. Verfahren nach Anspruch 1, wobei die auf Schaltern basierenden Modelle (350, 355) als Reaktion auf das Regelsignal (230, 240) umgeschaltet werden.

4. Verfahren nach Anspruch 3, wobei die auf Schaltern basierenden Modelle (350, 355) umgeschaltet werden in einen ersten Zustand, wenn das Regelsignal einen positiven Wert aufweist, und in einen zweiten Zustand, wenn das Regelsignal einen negativen Wert aufweist.

5. Verfahren nach Anspruch 1, wobei die Eingangswerte (820, 830) des auf dem PI-Regler basierenden Modells (810) auf einen vorgegebenen Bereich beschränkt werden.

6. Verfahren nach Anspruch 5, wobei der eingegebene obere Grenzwert (820) des auf dem PI-Regler basierenden Modells (810) auf einen vorgegebenen Bereich um die hohe Spannung der Gleichspannungsschiene begrenzt wird und der eingegebene untere Grenzwert (830) des auf dem PI-Regler basierenden Modells (810) auf einen vorgegebenen Bereich um die niedrige Spannung der Gleichspannungsschiene begrenzt wird, wenn einer von den entsprechenden Halbleiterschaltern in einem nichtlückenden Zustand ist.

7. Verfahren nach Anspruch 5, wobei die Eingangswerte (820, 830) des auf dem PI-Regler basierenden Modells (810) auf einen vorgegebenen Bereich begrenzt wird, der von der Spannung der Gleichspannungsschiene und einem Spannungsabfall einer Diode (D1, D2) definiert wird, wenn keiner von den Halbleiterschaltern in einem nichtlückenden Zustand ist.

8. Verfahren nach Anspruch 5, wobei der Wechselstrom (210) zum proportionalen Teil des PI-Reglers geleitet wird und der Ausgangsspannungswert (220) zum integrierenden Teil des PI-Reglers geleitet wird.

9. System zum Stimulieren des Verhaltens eines Wechselrichterphasenzweigs eines Leistungsregelungssystems in einem Lückbetrieb (DCM), wobei das Leistungsregelungssystem umfasst: eine Leistungsquelle mit Spannungsschienen, eine Steuereinheit, die mit dem Eingang der Leistungsquelle verbunden ist, und einen Verbraucher, der mit dem Ausgang der Leistungsquelle verbunden ist, wobei die Leistungsquelle, die einen Wechselrichterphasenzweig umfasst, ein Paar Halbleiterschaltelemente (SW1, SW2), die in Reihe zwischen Gleichspannungsschienen einer Gleichspannungsquelle geschaltet sind, und ein Paar in Reihe zwischen die Gleichspannungsschienen der Gleichspannungsquelle geschaltete Dioden (D1, D2) umfasst, wobei jede von den Dioden antiparallel mit einem

11

jeweiligen Halbleiterschaltelement verbunden ist, wobei ein Verbraucher mit dem Ausgang des Phasenzweigs verbunden ist, wobei

- jede Komponente des Wechselrichterphasenzweigs von einem individuellen Modell (350, 355; 360) dargestellt wird,
- die Modelle (350, 355), welche die Halbleiterschaltelemente darstellen, mit einem Eingangs-Gleichspannungswert (201) und einem Regelsignal (240, 230) versehen sind,
- das Modell (360), das die Dioden darstellt, mit den Ausgängen (820, 830) der Modelle (350, 355) und einem Wechselstrom (210) verbunden ist,

**dadurch gekennzeichnet, dass** die Modelle, welche die Halbleiterschaltelemente darstellen, auf Schaltern basierende Modelle (350, 355) sind und das Modell, das die Dioden darstellt, ein auf einem PI-Regler basierendes Modell ist,
wobei der Ausgangswert (820) des Modells (350), der einen oberen begrenzenden Wert darstellt, mit dem oberen Begrenzungseingang des PI-Reglers (810) verbunden ist und der Ausgangswert (830) des Modells (355), der den unteren begrenzenden Wert darstellt, mit dem unteren Begrenzungseingang des PI-Reglers (810) verbunden ist.

10. System nach Anspruch 9, wobei die Modelle (350, 355), welche die Halbleiterschaltelemente darstellen, ferner mit einem Modell (335) zum Erzeugen von Spannungsabfallwerten verbunden ist, die kennzeichnend sind für die Halbleiterschaltelemente und die Dioden.

11. System nach Anspruch 9, wobei die auf Schaltern basierenden Modelle (350, 355) zwei Eingangsports zum Empfangen von Eingangsspannungswerten, einen Eingangsport zum Empfangen eines Zustandsregelsignals und einen Ausgangsport zum Bereitstellen eines Ausgangsspannungswerts (820, 830) aufweisen.

12. System nach Anspruch 9, wobei das auf dem PI-Regler basierende Modell (810) einen Begrenzer zum Begrenzen der Ausgangsspannung (220) durch die Eingangswerte (820, 830) auf einen vorgegebenen Bereich umfasst.

13. System nach Anspruch 9, wobei ein Draht für Wechselstrom (210) mit dem proportionalen Teil des PI-Reglers verbunden ist und der Draht für Ausgangsspannung (220) mit dem integrierenden Teil des PI-Reglers verbunden ist.

14. System nach Anspruch 9, wobei der Verbraucher, der mit dem Ausgang des Wechselrichters verbunden ist, eine induktive Komponente umfasst.

**Revendications**

1. Procédé de simulation du comportement d'une patte de phase d'onduleur d'un système de commande électrique en mode de conduction discontinue (DCM), la patte de phase d'onduleur comprenant une paire d'éléments semi-conducteurs de commutation (SW1, SW2) branchés en série entre des rails de tension continue d'une alimentation électrique continue et une paire de diodes (D1, D2) branchées en série entre les rails de tension continue de l'alimentation électrique continue, chacune des diodes (D1, D2) étant branchée de manière non parallèle avec un élément semi-conducteur respectif de commutation (SW1, SW2), une charge étant branchée à la sortie de la patte de phase, et

- chaque composant de la patte de phase d'onduleur étant représenté par un modèle individuel (350, 355, 360)
- les modèles (350, 355) représentant les éléments semi-conducteurs de commutation (SW1, SW2) étant dotés d'une valeur de tension continue d'entrée (201) et d'un signal de commande (240, 230),
- le modèle (360) représentant les diodes (D1, D2) étant doté des valeurs (820, 830) des sorties des modèles (350, 355) et d'une valeur de courant alternatif (210),

**caractérisé en ce que** les modèles fondés sur une commutation (350, 355) sont utilisés pour les modèles représentant les éléments semi-conducteurs de commutation (SW1, SW2) et **en ce qu'**un modèle fondé sur un contrôleur de PI (810) est utilisé pour représenter les diodes (D1, D2),
la valeur de sortie (820) du modèle (350) représentant une valeur de limitation haute étant conduite jusqu'à l'entrée de limitation haute du contrôleur de PI (810), et la valeur de sortie (830) du modèle (355) représentant une valeur de limitation basse étant conduite jusqu'à l'entrée de limitation basse du contrôleur de PI (810).

**2.** Procédé selon la revendication 1, dans lequel les modèles (350, 355) représentant les éléments semi-conducteurs de commutation sont en outre dotés de valeurs de chute de tension caractéristiques pour les éléments semi-conducteurs de commutation et pour les diodes.

**3.** Procédé selon la revendication 1, dans lequel les modèles (350, 355) à base de commutateurs sont commutés en réponse au signal de commande (230, 240).

**4.** Procédé selon la revendication 3, dans lequel les modèles (350, 355) à base de commutateurs sont commutés dans un premier état quand le signal de commande prend une valeur positive et dans un second état quand le signal de commande prend une valeur négative.

**5.** Procédé selon la revendication 1, dans lequel les valeurs d'entrée (820, 830) du modèle fondé sur un contrôleur de PI (810) se limitent à une gamme prédéfinie.

**6.** Procédé selon la revendication 5, dans lequel la valeur d'entrée haute limitée (820) du modèle fondé sur un contrôleur de PI (810) est limitée à une gamme prédéfinie autour de la tension continue haute de rail et où la valeur d'entrée basse limitée (830) du modèle fondé sur un contrôleur de PI (810) est limitée à une gamme prédéfinie autour d'une tension continue basse de rail si l'un des commutateurs respectifs de semi-conducteur se trouve dans un état conducteur.

**7.** Procédé selon la revendication 5, dans lequel les valeurs d'entrée (820, 830) du modèle fondé sur un contrôleur de PI (810) sont limitées à une gamme prédéfinie définie par la tension continue de rail et par une chute de tension d'une diode (D1, D2) si aucun des commutateurs semi-conducteurs ne se trouve dans un état conducteur.

**8.** Procédé selon la revendication 5, dans lequel le courant alternatif (210) est conduit vers la partie proportionnelle du contrôleur de PI et où la valeur de tension de sortie (220) est conduite vers la partie d'intégration du contrôleur de PI.

**9.** Système de simulation du comportement d'une patte de phase d'onduleur d'un système de commande électrique en mode de conduction discontinue (DCM), le système de commande électrique comprenant une alimentation électrique dotée de rails de tension, une unité de commande connectée à l'entrée de l'alimentation électrique et une charge connectée à la sortie de l'alimentation électrique, l'alimentation électrique comprenant une patte de phase d'onduleur qui comprend une paire d'éléments semi-conducteurs de commutation (SW1, SW2) branchés en série entre les rails de tension continue d'une alimentation électrique continue et une paire de diodes (D1, D2) branchées en série entre les rails de tension de l'alimentation électrique continue, chacune des diodes étant branchée de manière non parallèle avec un élément semi-conducteur respectif de commutation avec une charge connectée à la sortie de la patte de phase, dans lequel

- chaque composant de la patte de phase d'onduleur est représenté par un modèle individuel (350, 355, 360)
- les modèles (350, 355) représentant les éléments semi-conducteurs de commutation sont connectés à une tension continue d'entrée (201) et à un signal de commande (240, 230),
- le modèle (360) représentant les diodes est connecté aux sorties (820, 830) des modèles (350, 355) et à un courant alternatif (210),

**caractérisé en ce que** les modèles représentant les éléments semi-conducteurs de commutation sont des modèles à base de commutation (350, 355) et **en ce que** le modèle représentant les diodes est un modèle fondé sur un contrôleur de PI,
la valeur de sortie (820) du modèle (350) représentant une valeur de limitation haute étant connectée à l'entrée de limitation haute du contrôleur de PI (810) et la valeur de sortie (830) du modèle (355) représentant une valeur de limitation basse étant connectée à l'entrée de limitation basse du contrôleur de PI (810).

**10.** Système selon la revendication 9, dans lequel les modèles (350, 355) représentant les éléments semi-conducteurs de commutation sont en outre reliés à un modèle (335) pour produire des valeurs de chute de tension caractéristiques pour les éléments semi-conducteurs de commutation et pour les diodes.

**11.** Système selon la revendication 9, dans lequel les modèles (350, 355) comptent deux ports d'entrée permettant de recevoir des valeurs de tension d'entrée, un port d'entrée permettant de recevoir un signal de commande d'état et un port de sortie permettant d'obtenir une valeur de tension de sortie (820, 830).

**12.** Système selon la revendication 9, dans lequel le modèle fondé sur un contrôleur de PI (810) comprend un limiteur permettant de limiter la tension de sortie (220) proche des valeurs d'entrée (820, 830) à une gamme prédéfinie.

**13.** Système selon la revendication 9, dans lequel un fil de courant alternatif (210) est connecté à la partie proportionnelle du contrôleur de PI et où la tension de sortie (220) est connectée à la partie d'intégration du contrôleur de PI.

**14.** Système selon la revendication 9, dans lequel la charge connectée à la sortie de l'onduleur comprend un composant inductif.

FIG. 1. a.
(Background Art)

FIG. 1. b.
(Background Art)

FIG. 2
(Background Art)

FIG. 3
(Background Art)

**200**

FIG. 4
(Background Art)

**300**

FIG. 5.  (Background Art)

FIG. 6.  (Background Art)

Time offset: 20ms

FIG. 7.

FIG. 8.

FIG. 9.

FIG. 10.

FIG. 11.

Time offset: 20ms

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7880460 B

**Non-patent literature cited in the description**

- **MAHMOUD MATAR ; REZA IRAVANI.** FPGA Implementation of the Power Electronic Converter Model for Real-Time Simulation of Electromagnetic Transients. *IEEE Transactions on Power Delivery,* 2010, vol. 25, 852-860
- **GUSTAVO G. PARMA ; VENKATA DINAVAHI.** Real-Time Digital Hardware Simulation of Power Electronics and Drives. *IEEE Transactions on Power Delivery,* 2007, vol. 22, 1235-1246
- **TAREK OULD BACHIR ; JEAN-PIERRE DAVID.** FPGA-Based Real-Time Simulation of State-Space Models Using Floating-Point Cores. *Proceedings of the 14th International Power Electronics and Motion Control Conference (EPE-PEMC 2010),* 06 September 2010, S2 26-31
- **JULIO C. G. PIMENTEL ; HOANG LE-HUY.** Hardware Emulation for Real-Time Power System Simulation. *Proceedings of International Symposium on Industrial Electronics: IEEE ISIE,* 09 July 2006, 1560-1565
- **LI YONG ; CHANG TIANQING ; BAI FAN ; CHEN YULIN.** Switching Characteristics Simulation of IGBT Based on FPGA. *Proceedings of International Conference on Computational Problem-Solving (ICCP 2010),* 03 December 2010, 386-391
- **AUNG MYAING ; VENKATA DINAVAHI.** FPGA-Based Real-Time Emulation of Power Electronic Systems With Detailed Representation of Device Characteristics. *IEEE Transactions on Industrial Electronics,* 2011, vol. 58, 358-368
- **WENTAO WANG ; ZHUOXUAN SHEN ; VENKATA DINAVAHI.** Physics-Based Device-Level Power Electronic Circuit Hardware Emulation on FPGA. *IEEE Transactions on Industrial Informatics,* 2014, vol. 10, 2166-2179
- **HANDY FORTIN BLANCHETTE ; TAREK OULD-BACHIR ; JEAN PIERRE DAVID.** A State-Space, Modeling Approach for the FPGA-Based Real-Time Simulation of High Switching Frequency Power Converters. *IEEE Transactions on Industrial Electronics,* 2012, vol. 59, 4555-4567